# EUROPÄISCHE PATENTSCHRIFT

(11) **EP 1 121 392 B1**
(45) Veröffentlichungstag und Bekanntmachung des Hinweises auf die Patenterteilung: **22.01.2003**
(21) Anmeldenummer: 99948932.1
(22) Anmeldetag: 05.10.1999
(51) Int. Cl.: C08L 75/04

(54) **MISCHUNGEN ENTHALTEND THERMOPLASTISCHES POLYURETHAN SOWIE EINEN ASA-WERKSTOFF**
MIXTURES CONTAINING THERMOPLASTIC POLYURETHANE AND AN ASA-MATERIAL
MELANGES CONTENANT DU POLYURETHANE THERMOPLASTIQUE ET UN MATERIAU ASA

(30) Priorität: 15.10.1998 DE 19847566
(43) Veröffentlichungstag der Anmeldung: 08.08.2001
(73) Patentinhaber: BASF AKTIENGESELLSCHAFT, 67056 Ludwigshafen (DE)
(72) Erfinder: NIESSNER, Norbert, D-67159 Friedelsheim (DE); GOTTSCHALK, Axel, D-67435 Neustadt (DE); EBERLE, Wolfgang, D-67071 Ludwigshafen (DE); BRÜNING, Ines, D-49356 Diepholz (DE); SCHOLZ, Günter, D-49448 Lemförde (DE)
(86) Internationale Anmeldenummer: EP9907375
(87) Internationale Veröffentlichungsnummer: WO00022045

(56) Entgegenhaltungen:
- EP-A- 0 384 233
- EP-A- 0 462 471
- EP-A- 0 475 220

## Beschreibung

Die Erfindung betrifft Mischungen enthaltend
(A) 50 bis 95 Gew.-% mindestens eines thermoplastischen Polyurethans und
(B) 5 bis 50 Gew.-% mindestens eines ASA-Werkstoffes auf der Basis von
(B1) 10 bis 90 Gew.-% mindestens einem Pfropfkautschuk basierend auf
(B11) 50 bis 95 Gew.-% einer Pfropfgrundlage hergestellt mit
(B111) 70 bis 99,9 Gew.-% mindestens einem Acrylsäurealkylester
(B112) 0,1 bis 30 Gew.-% mindestens einem mindestens bifunktionellen Vernetzer,
(B113) 0 bis 29,9 Gew.-% mindestens einem weiteren copolymerisierbaren Monomeren,
(B12) 5 bis 50 Gew.-% einer Pfropfhülle auf der Basis von
(B121) 75 bis 85 Gew.-% mindestens einem vinylaromatischen Monomeren, bevorzugt Styrol und/oder Styrolderivaten,
(B122) 15 bis 25 Gew.-% mindestens einem polaren, copolymerisierbaren ungesättigten Monomeren, bevorzugt Acrylnitril und/oder Methacrylnitril,
(B123) 0 bis 25 Gew.-% mindestens einem weiteren Comonomer,
(B2) 10 bis 90 Gew.-% mindestens einem Copolymeren hergestellt mit den Komponenten
(B21) 76 bis 85 Gew.-% mindestens einem vinylaromatischen Monomeren, bevorzugt Styrol und/oder Styrolderivaten,
(B22) 15 bis 24 Gew.-% mindestens einem polaren, copolymerisierbaren ungesättigten Monomeren, bevorzugt Acrylnitril und/oder Methacrylnitril,
(B23) 0 bis 9 Gew.-% mindestens einem Comonomeren,
wobei sich die Gewichtsangaben zu (A) und (B) auf das Gewicht der Summe der Komponenten (A) und (B) beziehen und die Gewichtsangaben zu (B1) und (B2) auf das Gewicht von (B), die Gewichtsangaben zu (B11 und B12) auf das Gewicht von (B1), die Gewichtsangaben zu (B111), (B112) und (B113) auf das Gewicht der Komponente (B11), die Gewichtsangaben zu (B121), (B122) und (B123) auf das Gewicht von (B12) und die Gewichtsangaben von (B21), (B22) und (B23) auf das Gewicht von (B2) bezogen sind.

Des weiteren bezieht sich die Erfindung auf Verfahren zur Herstellung der Mischungen sowie von Kabelummantelungen, Folien, Schläuchen, Fasern, Profilen, Schuhschalen, Schuhsohlen, technischen Formteilen, Gebrauchsartikeln, Formkörpern aller Art, Beschichtungen, Faltenbälgen, Tierohrmarken und/oder Blasformkörpern durch Extrusion, Spritzguß oder Kalandrierung der erfindungsgemäßen Mischungen und die derart erhältlichen Produkte.

Mischungen aus thermoplastischen Polyurethanen, im Folgenden auch als TPU bezeichnet, sowie Acrylnitril-Styrol-Acrylester-Copolymeren, im folgenden auch als ASA bezeichnet, sind aus der Literatur allgemein bekannt. Sie zeichnen sich als Werkstoffe durch eine hohe Festigkeit bei gleichzeitig guter Elastizität aus. So werden in DD-A 301 057, DE-A 2 854 407, DE-A 4 211 415 und DE-A 3 938 817 allgemein Mischungen von TPU mit Acrylsäureester-Copolymeren beschrieben. Mischungen enthaltend TPU sowie ASA-Werkstoffe auf der Basis von Pfropfkautschuken und Copolymeren werden in diesen Schriften nicht offenbart.
EP-A 475 220 beschreibt Folien, die aus einer Mischung aus TPU, ASA und einem thermoplastischen Harz bestehen und eine sehr gute Eigenstandfestigkeit, sehr gute Licht-, Wärme- und Chemikalienbeständigkeit sowie keine Ausgasungen aufweisen sollen. Nachteilig an diesen Mischungen, deren ASA-Werkstoff mit jeweils einem sehr hohen Anteil an Acrylnitril von 28 Gew.-% hergestellt wurde, sind deren schlechten Fließeigenschaften und insbesondere die ungenügende Zähigkeit, die für viele Anwendungen besonders gewünscht ist.

Der vorliegenden Erfindung lag deshalb die Aufgabe zugrunde, Mischungen auf der Basis von TPU und ASA-Werkstoffen hinsichtlich ihrer Fließeigenschaften und ihrer Zähigkeit zu optimieren.

Diese Aufgabe konnte erfindungsgemäß durch die eingangs beschriebenen Mischungen gelöst werden.

Die in den erfindungsgemäßen Mischungen enthaltenen ASA-Werkstoffen, die auf einem Pfropfkautschuk B1 und einem Copolymeren B2 basieren, konnten durch die vorliegende technische Lösung im Hinblick auf die hohen Anforderungen bezüglich des Fließverhaltens und insbesondere der Zähigkeit verbessert werden. Dies gelang durch eine Optimierung der Gewichtsanteile der Monomeren, auf denen B1 und B2 basieren. Überraschender weise konnte festgestellt werden, daß insbesondere der definierte, niedrige Anteil an Acrylnitril im Verhältnis zum Styrol zu einer Verbesserung der Zähigkeit führt. Der erfindungsgemäß niedrige Anteil an Acrylnitril von 15 bis 25 Gew.-% sowohl in B12 als auch in B2 war zur Erzielung dieses wesentlichen Vorteils im Hinblick auf den Stand der Technik nicht vorhersehbar, da dem Fachmann allgemein bekannt war, daß üblicherweise die Zähigkeit mit steigenden Acrylnitrilanteil und sinkendem Styrolanteil zunimmt. So weist beispielsweise ein Styrol-Acrylnitril-Copolymer eine geringere Sprödigkeit und eine höhere Zähigkeit auf als ein Polystyrol mit gleichem Molekulargewicht, das ohne Acrylnitril hergestellt wurde.

Zu den in den erfindungsgemäßen Mischungen enthaltenen Komponenten kann folgendes ausgeführt werden:

Als TPU (A) können in den erfindungsgemäßen Mischungen-allgemein übliche TPU verwendet werden, die nach bekannten Verfahren durch Umsetzung von (a) Isocyanaten mit (b) gegenüber Isocyanaten reaktiven Verbindungen und gegebenenfalls (c) Kettenverlängerungsmitteln in Gegenwart von gegebenenfalls (d) Katalysatoren und/oder (e) Hilfs- und/oder Zusatzstoffen hergestellt werden können, wobei das Verhältnis der Isocyanatgruppen der Komponente (a) zur Summe der gegenüber den Isocyanaten reaktiven Gruppen der Komponenten (b) und gegebenenfalls (c) üblicherweise 1:0,9 bis 1:1,1 beträgt.
a) Als Isocyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylen-diisocyanat-1,6, 2-Methylpentamethylen-diisocyanat-1,5,2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie 1-Isocyanato-3,3,5-trimethyl-5-isocyanatomethyl-cyclohexan (Isophoron-diisocyanat), 1,4- und/oder 1,3-Bis(isocyanatomethyl)cyclohexan (HXDI), 1,4-Cyclohexan-diisocyanat, 1-Methyl-2,4- und -2,6-cyclohexan-diisocyanat sowie die entsprechenden Isomerengemische, 4,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 3,3'-Dimethyl-4,4'-biphenyldiisocyanat (TODI), p-Phenylendiisocyanat (PDI), m-, p-Xylylendiisocyanat (XDI), 4,4'-, 2,4'- und 2,2'-Diphenylmethan-diisocyanat (MDI), Gemische aus 2,4'- und 4,4'-Diphenylmethan-diisocyanat, urethanmodifizierte flüssige 4,4'- und/oder 2,4'-Diphenylmethan-diisocyanate, 4,4'-Diisocyanato-diphenylethan- (1,2) (EDI) und 1,5-Naphthylen-diisocyanat. Vorzugsweise verwendet werden 1,5-Naphthylen-diisocyanat, 4,4'-Bicyclohexyl-methandiisocyanat, Hexamethylen-diisocyanat-1,6, Diphenylmethandiisocyanat-Isomerengemische mit einem 4,4'-Diphenylmethandiisocyanatgehalt von größer als 96 Gew.% und insbesondere 4,4'-Diphenylmethan-diisocyanat und Hexamethylen-diisocyanat-1,6.
b) Als gegenüber Isocyanaten reaktive Substanzen (b) eignen sich beispielsweise Polyhydroxylverbindungen mit Molekulargewichten von 500 bis 8000, vorzugsweise bekannte Polyetherole und/oder Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die genannten Polyhydroxylverbindungen können als Einzelkomponenten oder in Form von Mischungen zur Anwendung kommen.
   Die Mischungen zur Herstellung der TPU bzw. die TPU basieren üblicherweise zumindest überwiegend auf difunktionellen gegenüber Isocyanaten reaktiven Substanzen, d.h. die mittlere Funktionalität der Komponente (d) beträgt vorzugsweise 1,8 bis 2,6, besonders bevorzugt 1,9 bis 2,2. Die TPU sind somit vorwiegend unverzweigt, d.h. überwiegend nicht vernetzt, aufgebaut.

Vorzugsweise verwendet werden Polyetherole auf der Basis von Propylenoxid-1,2 und Ethylenoxid, in denen mehr als 50 %, vorzugsweise 60 bis 100 % der OH-Gruppen primäre Hydroxylgruppen sind und bei denen zumindest ein Teil des Ethylenoxids als endständiger Block angeordnet ist und insbesondere Polyoxytetramethylen-glykole (Polytetrahydrofuran).

Die im Falle der TPU im wesentlichen linearen Polyetherole besitzen üblicherweise Molekulargewichte von 500 bis 8000, vorzugsweise 600 bis 6000 und insbesondere 800 bis 3500. Sie können sowohl einzeln als auch in Form von Mischungen untereinander zur Anwendung kommen.

Geeignete Polyesterole können beispielsweise aus üblichen Dicarbonsäuren mit 2 bis 12 Kohlenstoffatomen, vorzugsweise 4 bis 8 Kohlenstoffatomen, beispielsweise Bernsteinsäure, Glutarsäure, Korksäure, Azelainsäure, Sebacinsäure, Adipinsäure, Phthalsäure, Isophthalsäure und/oder Terephthalsäure und bekannten mehrwertigen Alkoholen, beipielsweise Ethandiol, Propandiol-1,3, Butandiol-1,4, Pentandiol-1,5, Hexandiol-1,6, Decandiol-1,10, 2,2-Dimethylpropandiol-1,3, Propandiol-1,2, Diethylenglykol und/oder Dipropylenglykol hergestellt werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise (ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Alkandiol-polyadipate mit 2 bis 6 Kohlenstoffatomen im Alkylenrest, wie z.B. Ethandiol-polyadipate, 1,4-Butandiol-polyadipate, Ethandiolbutandiol-1,4-polyadipate, 1,6-Hexandiol-neopentylglykol-polyadipate, Polycaprolactone und insbesondere 1,6-Hexandiol-1,4-butandiol-polyadipate.

Die Polyesterole besitzen vorzugsweise Molekulargewichte (Gewichtsmittel) von 500 bis 6000, besonders bevorzugt von 800 bis 3500.
c) Als Kettenverlängerungsmittel (c), die üblicherweise Molekulargewichte von 60 bis 499, vorzugsweise 60 bis 300 aufweisen, kommen vorzugsweise Alkandiole mit 2 bis 12 Kohlenstoffatomen, vorzugsweise mit 2, 4 oder 6 Kohlenstoffatomen, wie z.B. Ethandiol, Hexandiol-1,6, und insbesondere Butandiol-1,4 und Dialkylenetherglykole wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephthalsäure-bis-ethandiol oder -butandiol-1,4, Hydroxyalkylenether des Hydrochinons, wie z.B. 1,4-Di-(β-hydroxyethyl)-hydrochinon, (cyclo) aliphatische Diamine, wie z.B. 4,4'-Diaminodicyclohexylmethan, 3,3'-Dimethyl-4,4'-diaminodicyclohexylmethan, 1-Amino-3,3,5-trimethyl-5-aminomethyl-cyclohexan, Ethylendiamin, 1,2-, 1,3-Propylen-diamin, N-Methyl-propylendiamin-1,3, N,N'-Dimethylethylendiamin und aromatische Diamine, wie z.B. 2,4- und 2,6-Toluylen-diamin, 3,5-Diethyl-2,4- und -2,6-toluylen-diamin und primäre, ortho-di-, -tri- und/oder -tetraalkylsubstituierte 4,4'-Diamino-diphenylmethane.
   Als Kettenverlängerungsmittel finden vorzugsweise Verwendung Alkandiole mit 2 bis 6 Kohlenstoffatomen im Alkylenrest, insbesondere Butandiol-1,4 und/oder Dialkylenglykole mit 4 bis 8 Kohlenstoffatomen.

Zur Einstellung der üblichen Härte der TPUs und der Schmelzpunkte der TPUs werden die Aufbaukomponenten (b) und (c) üblicherweise in einem molaren Verhältnis (b) : (c) von 1: 0,8 bis 1: 10, bevorzugt 1: 1 bis 1: 6,4 variiert, wobei die Härte und der Schmelzpunkt der TPU mit zunehmendem Gehalt an Diolen ansteigt.

Bevorzugt werden TPU auf der Basis von: (a) 4,4'-Diphenylmethan-diisocyanat (MDI), und/oder Hexamethylendiisocyanat, (b) Polyoxytetramethylenglykol, Polyetherole auf Basis Propylenoxid-1,2 und Ethylenoxid und/oder Polyesterole auf Basis Alkandiolpolyadipat mit 2 bis 6 Kohlenstoffatomen im Alkylenrest sowie (c) Ethandiol-1,2, Butandiol-1,4, Ethandiol und/oder Hexandiol-1,6 eingesetzt, wobei das Verhältnis der Isocyanatgruppen der Komponente (a) zur Summe der gegenüber den Isocyanaten reaktiven Gruppen der Komponenten (b) und (c) bevorzugt 1:0,9 bis 1:1,1 beträgt und (b) und (c) besonders bevorzugt in einem molaren Verhältnis von (b) : (c) von 1: 1 bis 1: 6,4 eingesetzt werden.
(d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.
(e) Neben Katalysatoren können den Aufbaukomponenten auch übliche Hilfsmittel und/oder Zusatzstoffe (e) hinzugefügt werden. Genannt seien beispielsweise oberflächenaktive Substanzen, Füllstoffe, Flammschutzmittel, Keimbildungsmittel, Oxidationsverzögerer, Stabilisatoren, Gleit- und Entformungshilfen, Farbstoffe und Pigmente, Inhibitoren, Stabilisatoren gegen Hydrolyse, Licht, Hitze oder Verfärbung, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Die Herstellung der TPUs aus beispielsweise den beschriebenen Ausgangskomponenten ist allgemein bekannt und vielfach beschrieben. Z.B. kann das Reaktionsgemisch enthaltend (a), (b) und gegebenenfalls (c), (d) und/oder (e) nach den bekannten one-shotoder nach dem Prepolymerverfahren umgesetzt werden, beispielsweise in einem Reaktionsextruder und/oder auf einer üblichen Bandanlage. Die derart hergestellten TPUs können anschließend pelletiert oder granuliert werden und mit der Komponente B zu den erfindungsgemäßen, bevorzugt homogenen Mischungen verarbeitet werden.

Bevorzugt können die TPUs A bzw. Mischungen enthaltend A und B derart hergestellt werden, daß man die thermoplastischen Polyurethane durch Umsetzung von (a) Isocyanaten mit (b) gegenüber Isocyanaten reaktiven Verbindungen und gegebenenfalls (c) Kettenverlängerungsmitteln in Gegenwart von gegebenenfalls (d) Katalysatoren und/oder (e) Hilfs- und/oder Zusatzstoffen in Gegenwart von B1, B2 oder B gemäß Anspruch 1 herstellt, und gegebenenfalls anschließend (wenn man die Umsetzung in Gegenwart von B1 oder B2 und nicht der Komponente B, die B1 und B2 enthält, durchführt) die während der Umsetzung fehlende Komponente B1 oder B2 zu dem Umsetzungsprodukt zumischt. Die Herstellung von A in Gegenwart von B1, B2 oder B kann bevorzugt in einem Reaktionextruder unter üblichen Bedingungen erfolgen. Beispielsweise kann B1, B2 oder B in den Trichter des Reaktionsextruders eingefüllt werden und gleichzeitig und/oder an späterer Stelle des Extruders die Ausgangsstoffe zur Herstellung von A getrennt oder einzeln, bevorzugt intensiv vermischt, zugegeben werden.

Derartig erhältliche Mischungen weisen ebenfalls deutlich verbesserte Eigenschaften auf.

Zu den Ausgangsstoffen und Herstellverfahren der Komponente B kann beispielhaft folgendes ausgeführt werden.

Als Monomere B111 für die Herstellung der Acrylsäureester-Polymerisate B11 kommen vorzugsweise Acrylsäurealkylester mit üblicherweise 1 bis 8 Kohlenstoffatomen, beispielsweise Methylacrylat, Ethylacrylat, Propylacrylat, Methylmethacrylat, Ethylmethacrylat, besonders bevorzugt mit 4 bis 8 Kohlenstoffatomen im Alkylrest, insbesondere Acrylsäure-n-butylester, und/oder Acrylsäureethylhexylester in Betracht. Die Acrylsäureester können bei der Herstellung der Pfropfgrundlage B11 einzeln oder in Mischung eingesetzt werden.

Als mindestens bifunktionelle, bevorzugt 2-3funktionelle Vernetzer B112 eignen sich beispielsweise Monomere, die zwei oder mehr zur Copolymerisation befähigte ethylenische Doppelbindungen enthalten, die nicht in 1,3-Stellung konjugiert sind. Geeignete Vernetzungsmonomere sind beispielsweise Divinylbenzol, Diallylmaleat, Diallylfumarat und/oder Diallylphthalat, bevorzugt der Acrylsäureester des Tricyclodecenylalkohols und/oder Tricyclopentadienylacrylat.

Als mögliche weitere, copolymerisierbare Monomere B113 können beispielsweise folgende Verbindungen Verwendung finden: Styrol, alpha-Methylstyrol, Acrylnitril, Methacrylnitril, Phenylmaleinimid, Acrylamid und/oder Vinylmethylether.

Zur Herstellung der auf die Pfropfgrundlage B11 gepfropften Hülle B12 eignen sich als vinylaromatische Monomere B121, bevorzugt Styrol und/oder Styrolderivate, z.B. Styrol, Alkylstyrole, bevorzugt α-Methylstyrol, und kernalkylierte Styrole, wie z.B. p-Methylstyrol und/oder tert.-Butylstyrol.

Beispiel für polare, copolymerisierbare ungesättigte Monomere B122 sind Acrylnitril und/oder Methacrylnitril.

Als mögliche weitere, copolymerisierbare Monomere B123 können beispielsweise folgende Verbindungen Verwendung finden: Acrylsäure, Methacrylsäure, Maleinsäureanhydrid, Methylacrylat, Ethylacrylat. Propylacrylat, Methylmethacrylat, Ethylmethacrylat, Phenylmaleinimid, Acrylamid und/oder Vinylmethylether.

Des weiteren können bei der Herstellung von B1, B1 und/oder B12 übliche Hilfs- und/oder Zusatzstoffe Verwendung finden, beispielsweise Emulgatoren, wie Alkalisalze von Alkyl- oder alkylarylsulfonsäuren, Alkylsulfate, Fettalkoholsulfonate, Salze höherer Fettsäuren mit 10 bis 30 Kohlenstoffatomen oder Harzseifen, Polymerisationsinitiatoren wie z.B. übliche Persulfate, beispielsweise Kaliumpersulfat oder bekannte Redox-Systeme, Polymerisationshilfsstoffe wie z.B. übliche Puffersubstanzen, durch welche pH-Werte von vorzugsweise 6 bis 9 eingestellt werden, z.B. Natriumbicarbonat und/oder Natriumpyrophosphat, und/oder Molekulargewichtsregler, beispielsweise Mercaptane, Terpinole und/oder dimeres α-Methylstyrol, wobei die Molekulargewichtsregler üblicherweise in einer Menge von 0 bis 3 Gew.-%, bezogen auf das Gewicht der Reaktionsmischung, eingesetzt werden.

Die Herstellung von ASA-Werkstoffen ist allgemein aus der Fachliteratur bekannt und beispielhaft in DE-A 12 60 135, Seite 3 bis 4, Zeilen 13 bis 23 und US 3 055 859, Seite 2 bis 4, Zeilen 62 bis 10 sowie für die Pfropfung in zwei Stufen in DE-A 31 49 358, Seite 6 bis 8, Zeilen 16 bis 5 und DE-A 32 27 555, Seite 6 bis 8, Zeilen 16 bis 5 beschrieben. Dabei kann zur Herstellung der erfindungsgemäßen ASA-Werkstoffen zunächst das als Pfropfgrundlage B11 dienende kautschukartige Acrylsäureester-Polymerisat z.B. durch Emulsionspolymerisation von B111 hergestellt werden, indem man beispielsweise B111 und den mindestens bifunktionellen Vernetzer B112 sowie gegebenenfalls B113 in beispielsweise wässriger Emulsion in an sich bekannter Weise bei Temperaturen zwischen 20 und 100 °C, vorzugsweise zwischen 50 und 80 °C polymerisiert. Auf diesen dabei entstehenden Polyacrylsäureester-Latex kann ein Gemisch von vinylaromatischen Monomeren B121 mit einem polaren, copolymerisierbaren ungesättigten Monomeren B122 sowie gegebenenfalls B123 aufgepfropft werden, wobei die Pfropfmischpolymerisation ebenfalls vorzugsweise in wäßriger Emulsion durchgeführt wird.

Die kautschukelastische Komponente B11 kann auch, wie in EP-B 534 212, Seite 4 bis 5, Zeilen 46 bis 43 beschrieben, auf einen harten, gegebenenfalls mit den unter B12 genannten Monomeren vernetzten Kern, der aus den für B12 genannten Monomeren aufgebaut ist, aufgepfropft werden.

Vorzugsweise handelt es sich dabei um einen harten Kern mit einer Glasübergangstemperatur Tg > 25°C, wobei der Anteil des Kerns B12 wie bereits dargestellt 5 bis 50 Gew.-%, bezogen auf das Gewicht von B1 beträgt.

In einer weiteren besonders bevorzugten Ausführungsform kann die Pfropfung gemäß DE-A 31 49 358, Seite 6 bis 8, Zeilen 16 bis 5 bzw. DE-A 32 27 555, Seite 6 bis 8, Zeilen 16 bis 5 in zwei Stufen erfolgen, wobei zuerst das vinylaromatische Monomer B121 in Gegenwart der Pfropfgrundlage B11 polymerisiert werden kann. In der zweiten Stufe kann dann die Pfropfmischpolymerisation mit einem Gemisch enthaltend mindestens ein vinylaromatische Monomer B121 und mindestens polares, copolymerisierbares Monomer B122 sowie gegebenenfalls B123 durchgeführt werden. Die eingesetzten und in den ASA-Werkstoffen enthaltenen Mengen der verschiedenen Komponenten sind bereits eingangs beschrieben worden.

Zur Erzielung der ASA-Werkstoffe mit guten mechanischen Eigenschaften ist der als Pfropfgrundlage dienende Polyacrylsäureester vernetzt, d.h. seine Herstellung durch Polymerisation von Acrylsäureestern erfolgt in Gegenwart von mindestens bifunktionellen, vernetzend wirkenden Monomeren B112.

Die Teilchengröße der Pfropfgrundlage B11 beträgt bevorzugt zwischen 0,04 und 10 µm, besonders bevorzugt zwischen 0,05 und 2 µm, insbesondere zwischen 0,07 und 1 µm. Die Teilchengröße der Pfropfkautschuke B1 liegt bevorzugt zwischen 0,05 und 15 µm, besonders bevorzugt zwischen 0,06 und 5 µm, insbesondere zwischen 0,08 und 1,2 µm.

Die in den erfindungsgemäßen Mischungen zusätzlich enthaltene Komponente B2, die als Hartmatrix betrachtet werden kann, basiert erfindungsgemäß auf den Komponenten B21, B22 und gegebenenfalls B23.

Als Komponente B 21 können beispielsweise folgende Monomere verwendet werden: allgemein bekannte vinylaromatische Monomere, bevorzugt Styrol und/oder Styrolderivate, z.B. Styrol, Alkylstyrole, bevorzugt α-Methylstyrol, und kernalkylierte Styrole, wie z.B. p-Methylstyrol und/oder tert.-Butylstyrol.

Beispielsweise folgende Monomere können als Komponente B 22 eingesetzt werden: allgemein für diesen Zweck bekannte polare, copolymerisierbare ungesättigte Monomere, z.B. Acrylnitril, Methacrylnitril, Acrylsäure, Methacrylsäure, (Meth)-Acrylsäurealkylester mit 1 bis 4 Kohlenstoffatomen im Alkylrest, beispielsweise Methylacrylat, Ethylacrylat, Propylacrylat, Methylmethacrylat und/oder Ethylmethacrylat, Maleinsäureanhydrid, Phenylmaleinimid, Acrylamid und/oder Vinylmethylether, bevorzugt Acrylnitril und/oder Methacrylnitril.

Als gegebenenfalls zusätzlich in B 2 enthaltenen Komponente B 23 können z.B. Monomere Verwendung finden, die allgemein für diesen Zweck bekannt sind, beispielsweise Ethylhexylacrylat, Stearylacrylat und/oder Alkylacrylamide.

Die Herstellung von B2 kann nach allgemein bekannten Methoden, wie sie z.B. in DE-A 31 49 358, Seite 9, Zeilen 18 bis 32 und DE-A 32 27 555, Seite 9, Zeilen 18 bis 32 beschrieben sind, durchgeführt werden, beispielsweise durch allgemein bekannte Copolymerisation von B21, B22 und gegebenenfalls B23 in Masse, Lösung, Suspension oder wässriger Emulsion bei üblichen Temperaturen und Drücken in bekannten Apparaturen, die beispielsweise im Kunststoff-Handbuch, Vieweg-Daumiller, Band V (Polystyrol), Carl-Hanser-Verlag, München 1969, S. 124, Z. 12 ff. beschrieben sind.

Die in den erfindungsgemäßen Mischungen enthaltenen Komponenten B1 und B2 können vor der Mischung mit dem thermoplastischen Polyurethan A intensiv vermischt werden. Bevorzugt werden die Komponenten in dafür geeigneten Aggregaten (Extruder, Kneter, Spritzgußmaschine, Presse, Kalander etc) bei erhöhten Temperaturen, bevorzugt 170 bis 250, insbesondere 180 bis 230 °C, gemischt.

Die erfindungsgemäßen Mischungen können bevorzugt zusätzlich zu (A) und (B) Hilfs- und/oder Zusatzstoffe enthalten. Besonders bevorzugt sind erfindungsgemäß Mischungen enthaltend 50 bis 100 Gew.-% A und B und 0 bis 50 Gew.-% Hilfs- und/oder Zusatzstoffe. Als Hilfs- und/oder Zusatzstoffe können beispielsweise Weichmacher, Antistatika, Lichtschutzmittel, Gleitmittel, Treibmittel, Haftvermittler, weitere verträgliche Thermoplastische Kunststoffe, beispielsweise Polyester (z.B. Polyethylenterephthalat, Polybutylenterephthalat), Polycarbonat, Polyamid, Polyoxymethylen, Polystyrol, Polyethylen, Polypropylen, Polyvinylchlorid, Füllstoffe, oberflächenaktive Substanzen, Flammschutzmittel, Farbstoffe und Pigmente, Stabilisatoren gegen Oxidation, Hydrolyse, Licht, Hitze oder Verfärbung und/oder Verstärkungsmittel enthalten sein. Diese Hilfs- und/oder Zusatzstoffe können sowohl bereits bei der Herstellung der TPU, wie bereits beschrieben, eingesetzt werden, als auch der Komponente (A) und/oder (B) bei der Herstellung der Mischung zugesetzt werden.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, Polyethylen-Wachse, Polypropylen-Wachse, Fettalkohole mit 6 bis 20 Kohlenstoffatomen, Ketone, Carbonsäuren wie Fettsäuren, Montansäure oder oxidiertes Polyethylen-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der b-(3,5-di-tertierbutyl-4-hydroxyphenylpropionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityl-tetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Mischungen verwendet werden.

Bei der Mischung der Komponenten (A) und (B) liegen diese bevorzugt in einem fließfähigen, erweichten oder geschmolzenen Zustand vor. Das homogene Vermischen der Komponenten erfolgt bevorzugt bei Temperaturen, die über den Schmelztemperaturen von (A) und (B) liegen. Üblicherweise beträgt die Temperatur, bei der die Vermischung der Komponenten erfolgt, 160 bis 250 °C, vorzugsweise 190 bis 240 °C, besonders bevorzugt 200 bis 235 °C. Das Vermischen der Komponenten zu einem homogenen Produkt kann mit üblichen Geräten, die Einrichtungen zum Heizen und Rühren, Kneten oder Walzen aufweisen, kontinuierlich oder diskontinuierlich bevorzugt mit Entgasung durchgeführt werden. Bevorzugt erfolgt das Vermischen der Komponenten (A) und (B) in einem üblichen Extruder, wobei die Komponenten A und B gemischt oder einzeln beispielsweise vollständig über den Trichter in den Extruder eingeführt oder auch anteilig an späterer Stelle des Extruders zum geschmolzenen oder festen, im Extruder befindlichen Produkt eingeführt werden können.

Vorzugsweise werden die Komponenten, und insbesondere das TPU, vor Verarbeitung getrocknet. In einem besonders bevorzugten Verfahren werden die Komponenten B1 und B2 separat vorgemischt (bevorzugt im Extruder) und der so hergestellte "Compound" anschließend mit Komponente A unter o.g. Bedingungen gemischt.

Die schmelzgemischten Komponenten werden bevorzugt anschließend abgekühlt und gleichzeitig oder auch nach der gegebenenfalls erst teilweise erfolgten Abkühlung zerkleinert und insbesondere granuliert. Die so erhaltenen Produkte dienen der weiteren Verarbeitung durch Spritzguß, Extrusion, Kalandrierung, Pressen, Blasen etc.

Die erfindungsgemäßen Mischungen, die bevorzugt eine Shore-Härte von D 30 bis 100 aufweisen, können beispielsweise pelletiert oder granuliert, oder nach allgemein bekannten Verfahren, beispielsweise durch Extrusion, Spritzguß oder Kalandrierung zu Kabelummantelungen. Folien, Schläuchen, Fasern, Profilen, Schuhschalen, Schuhsohlen, technischen Formteilen, Gebrauchsartikeln, Formkörpern aller Art, Beschichtungen, Faltenbälgen, Tierohrmarken und/oder Blasformkörpern verarbeitet werden.

Die derart erfindungsgemäß hergestellten Kabelummantelungen, Folien, Schläuche, Fasern, Profile, Schuhschalen, Schuhsohlen, technischen Formteile, Gebrauchsartikel, Formkörper aller Art, Beschichtungen, Faltenbälge, Tierohrmarken und/oder Blasformkörper enthaltend die erfindungsgemäßen Mischungen weisen insbesondere eine hervorragende Zähigkeit und, einen "trockenen" Griff (d.h. niedrigere Klebrigkeit) auf.

Diese Vorteile sollen anhand der folgenden Beispiele dargestellt werden.

### Beispiele:

Komponente Ai) : Elastollan® 1185 A, Elastogran GmbH (TPU basierend auf MDI, Butandiol und Polytetrahydrofuran, Shore A Härte 85);
Komponente Aii): Elastollan® C 85 A, Elastogran GmbH (TPU basierend auf MDI, Butandiol und einem Polyester, Shore A Härte 85);
Komponente Aiii) : Elastollan® B 85 A, Elastogran GmbH (TPU basierend auf MDI, Butandiol und einem Polyester, Shore A Härte 85);
Komponente B1: Pfropfkautschuk, hergestellt gemäß Beispiel 1 der DE-A 12 60 135, allerdings mit folgenden Monomeren: 60 Gew.-% einer Pfropfgrundlage B11 aus 98 Gew.-% Polybutylacrylat als B111 und 2 Gew.-% Dicyclopentadienylacrylat und 40 Gew.-% einer Pfropfhülle B12 aus 75 Gew.-% Styrol als B121 und 25 Gew.-% Acrylnitril als B122, die Teilchengröße des Pfropfkautschuks betrug ca. 0,09 µm.
Komponente B2i) Copolymer hergestellt mit 67 Gew.-% Styrol als B21 und 33 Gew.-% Acrylnitril als B22; Viskositätszahl (gemessen in 0,5 %iger Toluol-Lösung bei Raumtemperatur): 60 ml/g
Komponente B2ii) Copolymer hergestellt mit 67 Gew.-% Styrol als B21 und 33 Gew.-% Acrylnitril als B22, VZ; Viskositätszahl (gemessen in 0,5 %iger Toluol-Lösung bei Raumtemperatur): 80 ml/g
Komponente B2iii) Copolymer hergestellt mit 81 Gew.-% Styrol als B21 und 19 Gew.-% Acrylnitril als B22, VZ Viskositätszahl (gemessen in 0,5 %iger Toluol-Lösung bei Raumtemperatur): 70 ml/g

Die Komponenten B2i, B2ii und B2iii wurden hergestellt nach einem Lösungspolymerisationsverfahren wie es beispielhaft beschrieben ist in: Kunststoff-Handbuch, Hrsg. Vieweg-Daumiller, Band V (Polystyrol), Carl-Hanser-Verlag, München, 1969, Seite 124, Zeile 12 ff..
Jede der B2-Komponenten wurde in getrennten Versuchen mit der Komponente B1 in einem Gewichtsverhältnis von 1 : 1 in einem Extruder (ZSK 30 Doppelschneckenextruder der Fa. Werner & Pfleiderer) bei einer Temperatur von 230°C einer innig vermischt.

Diese Mischungen B enthalten B1 und B2i, B2ii oder B2iii wurden wiederum mit der Komponente A in einem Extruder (ZSK 30 Doppelschneckenextruder der Fa. Werner & Pfleiderer) in einem Gewichtsverhältnis von A : B von 1 : 1 bei einer Temperatur von 230°C einer innig vermischt.

Die erfindungsgemäße Mischung des Beispiels 1 enthaltend den erfindungsgemäß definiert niedrigen Gehalt an Acrylnitril sowohl in der Komponente B1 als auch B2 weist im Vergleich mit den Vergleichsprodukten folgende besonders vorteilhafte Eigenschaften auf:

| Beispiel | 1e | 2v | 3v |
|---|---|---|---|
| Komponente A [Gew.-%] | 50 | 50 | 50 |
| Komponente B1 [Gew.-%] | 25 | 25 | 25 |
| Komponente B2iii [Gew.-%] | 25 | - | - |
| Komponente B2ii [Gew.-%] | - | 25 | - |
| Komponente B2i [Gew.-%] | - | - | 25 |
| MVI [220°C/5 kg] [ml/10 min] | 26 | 28 | 26 |
| Vicat A 50 [°C] | 99 | 100 | 100 |
| Kerbschlagzähigkeit | 23 | 14 | 16 |
| Durchstoßversuch, 23°C, [Nm] | 27 | 25 | 26 |
| Durchstoßversuch, -30°C, [Nm] | 45 | 42 | 36 |
| Zugfestigkeit [N/mm²] | 16 | 14 | 14 |
| Dehnung Fmax [%] | 111 | 65 | 75 |
| Reißfestigkeit [N/mm²] | 15 | 13 | 14 |
| Reißdehnung [%] | 143 | 85 | 92 |

MVI (Melt Volume Index): Bei 220°C und 5 kg, gemessen nach ISO 1133
Vicat: A 50, gemessen nach ISO 306
Charpy-Kerbschlagzähigkeit: gemessen nach ISO 179 1eA Durchstoßversuch: gemessen nach DIN 53443
Zugfestigkeit: gemessen nach ISO 527
Dehnung: gemessen nach ISO 527
Reißfestigkeit: gemessen nach ISO 527
Reißdehnung: gemessen nach ISO 527

Die Aufgabe der vorliegenden Erfindung, die mechanischen Eigenschaften von Mischungen enthaltend TPUs und ASA-Werkstoffe, insbesondere ihre Zähigkeit deutlich zu verbessern, konnte wie anhand der Meßergebnisse ersichtlich, gelöst werden. Die erfindungsgemäße Mischung des Beispiels 1e zeigt im Vergleich mit den Mischungen der Beispiele 2 und 3, zu deren Herstellung höhere Acrylnitril-und niedrigere Styrol-Anteile verwendet wurden, erheblich verbesserte Eigenschaften. So konnte erfindungsgemäß jede der gemessenen Eigenschaften, insbesondere aber die Kerbschlagzähigkeit, die Dehnung und Reißdehnung deutlich verbessert werden.

## Patentansprüche

1. Mischungen enthaltend
(A) 50 bis 95 Gew.-% mindestens eines thermoplastischen Polyurethans und
(B) 5 bis 50 Gew.-% mindestens eines ASA-Werkstoffes auf der Basis von
(B1) 10 bis 90 Gew.-% mindestens einem Pfropfkautschuk basierend auf
(B11) 50 bis 95 Gew.-% einer Pfropfgrundlage hergestellt mit
(B111) 70 bis 99,9 Gew.-% mindestens einem Acrylsäurealkylester
(B112) 0,1 bis 30 Gew.-% mindestens einem mindestens bifunktionellen Vernetzer,
(B113) 0 bis 29,9 Gew.-% mindestens einem weiteren copolymerisierbaren Monomeren,
(B12) 5 bis 50 Gew.-% einer Pfropfhülle auf der Basis von
(B121) 75 bis 85 Gew.-% mindestens einem vinylaromatischen Monomeren,
(B122) 15 bis 25 Gew.-% mindestens einem polaren, copolymerisierbaren ungesättigten Monomeren, bevorzugt Acrylnitril und/oder Methacrylnitril,
(B123) 0 bis 25 Gew.-% mindestens einem weiteren copolymerisierbaren Comonomer,
(B2) 10 bis 90 Gew.-% mindestens einem Copolymeren hergestellt mit den Komponenten
(B21) 76 bis 85 Gew.-% mindestens einem vinylaromatischen Monomeren,
(B22) 15 bis 24 Gew.-% mindestens einem polaren, copolymerisierbaren ungesättigten Monomeren,
(B23) 0 bis 9 Gew.-% mindestens einem Comonomeren,
wobei sich die Gewichtsangaben zu (A) und (B) auf das Gewicht der Summe der Komponenten (A) und (B) beziehen und die Gewichtsangaben zu (B1) und (B2) auf das Gewicht von (B), die Gewichtsangaben zu (B11 und B12) auf das Gewicht von (B1), die Gewichtsangaben zu (B111), (B112) und (B113) auf das Gewicht der Komponente (B11), (B121), (B122) und (B123) auf das Gewicht von (B12) und die Gewichtsangaben von (B21), (B22) und (B23) auf das Gewicht von (B2) bezogen sind.

2. Mischung nach Anspruch 1 enthaltend
50 bis 100 Gew.-% der Mischung gemäß Anspruch 1 und
0 bis 50 Gew.-% Hilfs- und Zusatzstoffe.

3. Verfahren zur Herstellung von Mischungen gemäß Anspruch 1 oder 2, **dadurch gekennzeichnet, daß** man die thermoplastischen Polyurethane durch Umsetzung von (a) Isocyanaten mit (b) gegenüber Isocyanaten reaktiven Verbindungen und gegebenenfalls (c) Kettenverlängerungsmitteln in Gegenwart von gegebenenfalls (d) Katalysatoren und/oder (e) Hilfs- und/oder Zusatzstoffen in Gegenwart von B1, B2 oder B gemäß Anspruch 1 herstellt, und gegebenenfalls anschließend die während der Umsetzung fehlende Komponente B1 oder B2 zu dem Umsetzungsprodukt zumischt.

4. Mischungen erhältlich durch ein Verfahren gemäß Anspruch 3.

5. Verfahren zur Herstellung von Kabelummantelungen, Folien, Schläuchen, Fasern, Profilen, Schuhschalen, Schuhsohlen, technischen Formteilen, Gebrauchsartikeln, Formkörpern aller Art, Beschichtungen, Faltenbälgen, Tierohrmarken und/oder Blasformkörpern durch Extrusion, Spritzguß oder Kalandrierung von Mischungen gemäß Anspruch 1, 2 oder 4.

6. Kabelummantelungen, Folien, Schläuche, Fasern, Profile, Schuhschalen, Schuhsohlen, technischen Formteile, Gebrauchsartikel, Formkörper aller Art, Beschichtungen, Faltenbälgen, Tierohrmarken und/oder Blasformkörper enthaltend Mischungen gemäß Anspruch 1, 2 oder 4.

7. Verwendung von Mischungen gemäß Anspruch 1, 2 oder 4 zur Herstellung von Kabelummantelungen, Folien, Schläuchen, Fasern, Profilen, Schuhschalen, Schuhsohlen, technischen Formteilen, Gebrauchsartikeln oder Formkörpern aller Art, Beschichtungen, Faltenbälgen, Tierohrmarken und/oder Blasformkörpern durch Extrusion, Spritzguß oder Kalandrierung.

## Claims

1. A blend comprising
(A) from 50 to 95 % by weight of at least one thermoplastic polyurethane and
(B) from 5 to 50 % by weight of at least one ASA material based on
(B1) from 10 to 90 % by weight of at least one graft rubber based on
(B11) from 50 to 95 % by weight of a grafting base prepared using
(B111) from 70 to 99.9 % by weight of at least one alkyl acrylate,
(B112) from 0.1 to 30 % by weight of at least one bifunctional crosslinker,
(B113) from 0 to 29.9 % by weight of at least one further copolymerizable monomer,
(B12) from 5 to 50 % by weight of a grafted shell based on
(B121) from 75 to 85 % by weight of at least one vinylaromatic monomer,
(B122) from 15 to 25 % by weight of at least one polar, copolymerizable unsaturated monomer, preferably acrylonitrile and/or methacrylonitrile,
(B123) from 0 to 25 % by weight of at least one further copolymerizable comonomer,
(B2) from 10 to 90 % by weight of at least one copolymer prepared using the components
(B21) from 76 to 85 % by weight of at least one vinylaromatic monomer,
(B22) from 15 to 24 % by weight of at least one polar, copolymerizable unsaturated monomer,
(B23) from 0 to 9 % by weight of at least one comonomer,
where the percentages by weight for (A) and (B) are based on the weight of the sum of the components (A) and (B) and the percentages by weight for (B1) and (B2) are based on the weight of (B), the percentages by weight for (B11) and (B12) are based on the weight of (B1), the percentages by weight for (B111), (B112) and (B113) are based on the weight of the component (B11), the percentages by weight for (B121), (B122) and (B123) are based on the weight of (B12) and the percentages by weight for (B21), (B22) and (B23) are based on the weight of (B2).

2. A blend as claimed in claim 1 comprising
from 50 to 100 % by weight of the blend as claimed in claim 1 and
from 0 to 50 % by weight of auxiliaries and additives.

3. A process for preparing blends as claimed in claim 1 or 2, which comprises preparing the thermoplastic polyurethanes by reacting (a) isocyanates with (b) compounds reactive toward isocyanates and, if desired, (c) chain extenders in the presence or absence of (d) catalysts and/or (e) auxiliaries and/or additives and in the presence of B1, B2 or B as defined in claim 1, and, if necessary, subsequently mixing the component B1 or B2 which was missing during the reaction into the reaction product.

4. A blend obtainable by a process as claimed in claim 3.

5. A process for producing cable sheathing, films, hoses, fibers, profiles, shoe uppers, shoe soles, industrial moldings, consumer articles, shaped bodies of all types, coatings, bellows, ear tags for animals and/or blow-molded articles by extrusion, injection molding or calendering of blends as claimed in any of claims 1, 2 and 4.

6. A cable sheath, film, hose, fiber, profile, shoe upper, shoe sole, industrial molding, consumer article, shaped body of any type, coating, bellows, ear tag for an animal and/or blow-molded article comprising a blend as claimed in any of claims 1, 2 and 4.

7. The use of a blend as claimed in any of claims 1, 2 and 4 for producing cable sheathing, films, hoses, fibers, profiles, shoe uppers, shoe soles, industrial moldings, consumer articles or shaped bodies of all types, coatings, bellows, ear tags for animals and/or blow-molded articles by extrusion, injection molding or calendering.

## Revendications

1. Mélanges contenant
(A) à raison de 50 à 95 % en poids, au moins un polyuréthane thermoplastique, et
(B) à raison de 5 à 50 % en poids, au moins une matière première ASA à base de
(B1) à raison de 10 à 90 % en poids, au moins un caoutchouc de greffage à base de
(B11) à raison de 50 à 95 % en poids, un substrat de greffage préparé avec
(B111) à raison de 70 à 99,9 % en poids, au moins un ester alkylique d'acide acrylique,
(B112) à raison de 0,1 à 30 % en poids, au moins un agent de réticulation au moins bifonctionnel,
(B113) à raison de 0 à 29,9 % en poids, au moins un autre monomère copolymérisable,
(B12) à raison de 5 à 50 % en poids, une enveloppe de greffage à base de
(B121) à raison de 75 à 85 % en poids, au moins un monomère vinylaromatique,
(B122) à raison de 15 à 25 % en poids, au moins un monomère insaturé copolymérisable polaire, de préférence l'acrylonitrile et/ou le méthacrylonitrile,
(B123) à raison de 0 à 25 % en poids, au moins un autre comonomère copolymérisable,
(B2) à raison de 10 à 90 % en poids, au moins un copolymère préparé avec les composants
(B21) à raison de 76 à 85 % en poids, au moins un monomère vinylaromatique,
(B22) à raison de 15 à 24 % en poids, au moins un monomère insaturé copolymérisable polaire,
(B23) à raison de 0 à 9 % en poids, au moins un comonomère,
dans lesquels, les indications en poids par rapport à (A) et (B) se rapportent au poids de la somme des composants (A) et (B), et les indications en poids par rapport à (B1) et (B2) se rapportent au poids de (B), les indications en poids par rapport à (B11) et (B12) se rapportent au poids de (B1), les indications en poids par rapport à (B111), (B112) et (B113) se rapportent au poids du composant (B11), les indications en poids par rapport à (B121), (B122) et (B123) se rapportent au poids de (B12) et les indications en poids de (B21), (B22) et (B23) se rapportent au poids de (B2).

2. Mélange selon la revendication 1 contenant, à raison de 50 à 100 % en poids, le mélange selon la revendication 1 et, à raison de 0 à 50 % en poids, des adjuvants et des additifs.

3. Procédé pour la préparation de mélanges selon la revendication 1 ou 2, **caractérisé en ce qu'**on prépare les polyuréthanes thermoplastiques en faisant réagir (a) des isocyanates avec (b) des composés aptes à réagir vis-à-vis d'isocyanates, et le cas échéant, (c) des agents d'allongement de chaînes en présence, le cas échéant, (d) des catalyseurs et/ou (e) des adjuvants et/ou des additifs en présence de B1, B2 ou B selon la revendication 1, et, le cas échéant, en ajoutant ensuite par mélange au produit réactionnel le composant B1 ou B2 qui manque lors de la mise en réaction.

4. Mélanges que l'on obtient via un procédé selon la revendication 3.

5. Procédé pour la préparation de gainages de câbles, de feuilles, de tuyaux flexibles, de fibres, de profilés, de dessus de chaussures, de semelles de chaussures, d'éléments moulés techniques, d'articles utilitaires, de corps moulés de tout type, d'enductions, de soufflets, de dispositifs de marquage pour animaux et/ou de corps moulés obtenus par soufflage sur matrice, par extrusion, moulage par injection ou calandrage des mélanges selon la revendication 1, 2 ou 4.

6. Gainages de câbles, feuilles, tuyaux flexibles, fibres, profilés, dessus de chaussures, semelles de chaussures, éléments moulés techniques, articles utilitaires, corps moulés de tout type, enductions, soufflets, dispositifs de marquage pour animaux et/ou corps moulés obtenus par soufflage sur matrice contenant des mélanges selon la revendication 1, 2 ou 4.

7. Utilisation de mélanges selon la revendication 1, 2 ou 4 pour la fabrication de gainages de câbles, de feuilles, de tuyaux flexibles, de fibres, de profilés, de dessus de chaussures, de semelles de chaussures, d'éléments moulés techniques, d'articles utilitaires ou de corps moulés de tout type, d'enductions, de soufflets, de dispositifs de marquage pour animaux et/ou de corps moulés obtenus par soufflage sur matrice, par extrusion, moulage par injection ou calandrage.
